# FASCICULE DE BREVET EUROPEEN

(11) **EP 2 343 432 B1**
(45) Date de publication et mention de la délivrance du brevet: **23.12.2015**
(21) Numéro de dépôt: 11150408.0
(22) Date de dépôt: 07.01.2011
(51) Int. Cl.: E06B 9/58, E04F 10/06, A47H 1/124, F16B 2/06

(54) **Ensemble de guidage latéral de tablier coulissant**
Seitliche Führungseinheit für einen Rollladen
Lateral guiding unit of a roller shutter

(30) Priorité: 07.01.2010 FR 1050072
(43) Date de publication de la demande: 13.07.2011
(73) Titulaire: Franciaflex, 45430 Checy (FR)
(72) Inventeur: Grajdeanu, Sorin, 45800, Saint Jean de Braye (FR); Stoens, François, 45430, Checy (FR)
(74) Mandataire: Bertrand, Didier

(56) Documents cités:
- EP-A1- 1 541 800
- EP-A2- 1 028 205
- DE-A1- 3 617 198
- DE-C1- 3 607 849
- DE-U1-202009 006 858
- NL-C- 47 793
- US-A1- 2004 000 782

## Description

La présente invention se rapporte à un ensemble de guidage latéral de tablier coulissant pour l'obturation des baies.

Un domaine d'application envisagé est notamment celui des stores vénitiens constitués d'un jeu de lamelles empilables. Toutefois, l'ensemble de guidage selon l'invention est également adapté aux volets roulants ou bien aux stores comportant une toile enroulable.

Des ensembles de guidage latéraux connus comprennent une paire de profilé en U et des bras support. Les profilés en U sont respectivement ajustés sensiblement parallèlement dans les bords latéraux d'une baie, ou d'une ouverture, pratiquée dans la paroi d'un bâtiment, et ils y sont maintenus en position fixe et en regard l'un de l'autre par l'intermédiaire des bras support. Ainsi, les deux bordures latérales d'un tablier sont aptes à venir coulisser respectivement dans les deux profilés en U en regard, et partant, le tablier coulisse également selon un plan défini par les deux profilés en U.

Afin de permettre l'ajustement des profilés en U, lesquels présentent un logement longitudinal interne destiné à recevoir les bordures latérales du tablier, ils sont munis de deux ailes externes longitudinales en regard situées à l'extérieur du logement longitudinal interne et présentant une extrémité libre en retour. Les deux extrémités libres en retour sont orientées l'une vers l'autre de manière à former deux épaulements internes de retenue. En outre, les bras support présentent d'une part une embase destinée à être montée vissée sur les bords latéraux de la baie, et d'autre part une extrémité de fixation opposée à l'embase destinée à venir en prise entre les deux ailes externes longitudinales. Pour ce faire, l'extrémité de fixation comporte un organe de blocage en deux parties parallèles. Ces deux parties parallèles présentent un bord frontal et une bordure externe. Les bordures externes sont opposées l'une de l'autre et elles présentent respectivement un retour d'accrochage. Les deux parties sont mobiles l'une par rapport à l'autre entre une position rapprochée et une position écartée. Lorsque les deux parties mobiles sont rapprochées l'une de l'autre, l'organe de blocage peut être engagé entre les deux ailes externes longitudinales des profilés en U, et ensuite, lorsque les deux parties mobiles sont écartées l'une de l'autre, non seulement les retours d'accrochage viennent respectivement en appui contre les deux épaulements internes de retenue des deux extrémités libres en retour des deux ailes externes longitudinales, mais aussi les bordures externes viennent respectivement en appui contre les deux extrémités fibres en retour des deux ailes externes longitudinales. Les parties mobiles sont maintenues à force dans la position écartée par l'intermédiaire d'une pièce de verrouillage monté à rotation entre les deux parties mobiles et ainsi, non seulement l'organe de blocage est emprisonné entre les deux ailes externes longitudinales, mais au surplus il y est maintenu en position fixe et partant, l'extrémité de fixation du bras support et le profilé en U sont maintenus ensemble pour former une liaison rigide. On pourra se référer au document EP 1 541 800, lequel décrit un tel dispositif.

Les bras support s'étendent sensiblement perpendiculairement au plan de la baie, tandis que les profilés en U sont ouverts l'un vers l'autre selon une direction sensiblement parallèle au plan de la baie. Aussi, les deux ailes externes longitudinales, constituant des éléments d'ancrage, s'étendent-elles sur l'une des ailes du profilé en U à l'opposé de l'autre aile du profilé en U. Ainsi, les bras support sont maintenus en position fixe sur les bords latéraux de la baie par l'intermédiaire de leur embase tandis que les profilés en U sont solidaires de l'extrémité de fixation des bras support.

Un inconvénient de ce type d'ensembles de guidage latéral, réside notamment dans le mode de liaison entre l'extrémité de fixation du bras support et du profilé en U. En effet, lorsque les deux parties parallèles de l'organe de blocage sont écartées l'une de l'autre pour venir en appui à force respectivement contre les deux extrémités libres en retour des deux ailes externes longitudinales, l'aile du profilé en U qui les supporte tend à se déformer. En conséquence, le coulissement libre des bordures du tablier à l'intérieur du logement longitudinal interne en est affecté. Au surplus, l'organe de blocage est relativement complexe et volumineux.

L'objet du document EP 1028205 présente les mêmes inconvénients. Les deux parties mobiles de l'extrémité de fixation viennent non plus en prise à l'intérieur des deux ailes externes qui sont alors réunies ensemble, mais à l'extérieur de chaque côté desdites ailes. Le rapprochement à force des deux parties mobiles provoque de la même façon la déformation du profilé en U.

Aussi, un problème qui se pose et que vise à résoudre la présente invention est de fournir un ensemble de guidage qui permette notamment d'éviter la déformation du profilé en U lorsque que l'extrémité de fixation y est reliée.

Dans ce but, la présente invention propose un ensemble de guidage latéral de tablier coulissant pour l'obturation de baie, ledit ensemble comprenant un profilé en U et au moins un bras support pour maintenir ledit profilé en U en position fixe le long d'un bord latéral d'une baie, ledit profilé en U présentant, d'une part un logement longitudinal interne apte à recevoir la bordure latérale d'un tablier coulissant, et d'autre part des éléments d'ancrage externes situés à l'extérieur dudit logement longitudinal interne, ledit au moins un bras support présentant une embase destinée à être montée sur ledit bord latéral de ladite baie, et une extrémité de fixation située à l'opposé de ladite embase, lesdits éléments d'ancrage externes dudit profilé en U étant aptes à venir en prise avec ladite extrémité de fixation pour relier ensemble ledit profilé en U et ledit bras support. Selon l'invention, lesdits éléments d'ancrage externes comportent une nervure pleine longitudinale ménagée longitudinalement sur ledit profilé en U, tandis que ladite extrémité de fixation comporte deux mâchoires en regard destinées à venir prendre en étau ladite nervure pleine, pour relier ensemble ledit profilé en U et ledit bras support.

Ainsi, une caractéristique de l'invention réside dans la mise en oeuvre d'un profilé en U muni d'une nervure pleine longitudinale et une extrémité de fixation comportant deux mâchoires en regard aptes à venir prendre en étau la nervure pleine longitudinale. De la sorte, le rapprochement à force des mâchoires qui vient prendre en étau la nervure pleine, provoque un écrasement sensible et une déformation localisée de la nervure pleine sans affecter l'aile du profilé en U de laquelle elle s'étend en saillie. En effet, contrairement aux éléments d'ancrage externes de profilés en U selon l'art antérieur, où les deux ailes externes longitudinales étendues à distance l'une de l'autre en saillie de l'aile du profilé en U, étaient écartées à force l'une de l'autre, ou bien rapprochées à force et provoquaient la déformation de cette aile, selon l'invention, la seule déformation est celle de l'écrasement local de la nervure pleine. Cet écrasement ne provoque aucune déformation du profilé en U, et permet au surplus d'obtenir une liaison plus ferme entre le profilé en U et le bras support.

En outre, le profilé en U qui est généralement filé d'une seule pièce, en aluminium par exemple, nécessite moins de matière lorsqu'il est réalisé avec une nervure pleine plutôt qu'avec deux ailes externes longitudinales.

Avantageusement, ladite nervure pleine longitudinale présente un bord libre renflé, par exemple en T, et les mâchoires viennent en prise en arrière du bord libre renflé. De la sorte, l'extrémité de fixation est prisonnière de la nervure pleine longitudinale.

Selon un mode de mise en oeuvre de l'invention particulièrement avantageux, lesdites deux mâchoires en regard sont montées réglables en translation entre une position rapprochée de ladite embase et une position écartée de ladite embase. De la sorte, les deux mâchoires prenant en étau la nervure pleine du profilé en U, sont susceptibles d'être réglées en translation, entre une position rapprochée et une position écartée de l'embase, ce qui permet ainsi de régler la position du profilé en U par rapport au bord de la baie. En outre, et ainsi qu'on l'expliquera plus en détail dans la suite de la description, cette caractéristique permet d'incliner le profilé en U pour pouvoir installer le tablier.

En outre, lesdites mâchoires en regard sont avantageusement montées réglables en translation entre une position rapprochée l'une de l'autre et une position écartée l'une de l'autre. Le réglage des mâchoires dans la position rapprochée permet d'ajuster l'intensité du serrage de la nervure pleine et d'assurer ainsi la rigidité de la liaison entre l'extrémité de fixation du bras support et le profilé en U.

Selon une variante de réalisation de l'invention ledit bras support comporte que ledit bras support comprend une platine montée en saillie de ladite embase et deux joues présentant respectivement une bordure avant, lesdites deux joues étant destinées à venir respectivement en applique contre les deux faces opposées de ladite platine, et lesdites joues sont reliées ensemble par un premier élément vissable traversant lesdites bordures de façon que lesdites bordures avant soient étendues en regard l'une de l'autre pour former lesdites mâchoires.

De la sorte, les deux joues sont ajustées ensemble en vis-à-vis et à distance l'une de l'autre, leur bordure avant venant en regard l'une de l'autre également, de manière à pouvoir les porter dans une position rapprochée l'une de l'autre, et partant, de façon à former étau avec leur bordure avant correspondante. Grâce au premier élément vissable traversant lesdites bordures la position relative des joues peut être réglée et partant, le rapprochement des bordures avant pour régler le serrage des mâchoires sur la nervure pleine longitudinale. L'élément vissable est par exemple constitué d'une tige filetée traversant sensiblement perpendiculairement les deux bordures, et munie à chaque extrémité d'un écrou. Par ailleurs, grâce à la platine les joues sont alors aptes à être rendues mobiles en translation parallèlement au plan moyen défini par ladite platine.

Avantageusement, lesdites joues présentent un retour en saillie desdites bordures avant pour former des dents, ledit retour présentant une portée d'appui opposée à un bord frontal. Portée d'appui et bord frontal sont alors sensiblement parallèles entre eux. Ainsi, les retours en saillies desdites bordures avant des deux joues assemblées forment des dents qui s'étendent respectivement l'une vers l'autre et elles permettent un meilleur emprisonnement de la nervure pleine longitudinale, notamment lorsqu'elle présente un bord libre renflé.

En outre, selon un mode de réalisation particulier de l'invention, la bordure avant de l'une desdites joues présente une rainure pratiquée en arrière du retour de ladite une desdites joues et sensiblement parallèlement audit retour, tandis que la bordure avant de l'autre desdites joues présente une languette située en arrière du retour de ladite autre desdites joues et sensiblement parallèlement audit retour, et ladite languette est apte à être engagée à l'intérieur de ladite rainure. De la sorte, lorsque les joues sont rapprochées ou bien écartées l'une de l'autre, la languette s'enfonce ou bien ressort de la rainure et guide ainsi en translation les deux joues l'une par rapport à l'autre qui demeurent sensiblement parallèles et ne basculent pas l'une par rapport à l'autre.

Par ailleurs, les retours desdites joues présentent préférentiellement un chanfrein formant respectivement un angle aigu avec les portées d'appui. Ainsi, lorsque la nervure pleine longitudinale est entraînée vers l'extrémité de fixation, en particulier lorsqu'elle présente un bord libre renflé, elle vient prendre appui dans un premier temps contre les chanfreins des deux retours, lesquels chanfreins forment alors rampe et permettent de provoquer l'écartement des deux joues, dans un deuxième temps, à mesure que la nervure pleine longitudinale est entraînée, de manière à autoriser l'engagement de la nervure pleine longitudinale entre les deux retours.

En outre, lesdites joues sont reliées ensemble par des organes ressorts pour entraîner lesdites bordures l'une vers l'autre. De la sorte, et en particulier lorsque la nervure pleine longitudinale présente un bord libre renflé et que les joues présentent un retour en saillie des bordures, la nervure pleine longitudinale peut être engagée entre les mâchoires qui s'écartent tout d'abord l'une de l'autre puis se rapprochent ensuite grâce aux organes ressorts lorsque le bord libre renflé s'étend en arrière des retours. On observera que l'écartement des retours, lesquels sont rappelés par l'intermédiaire des joues grâces aux organes ressorts, est facilité lorsqu'ils sont chanfreinés.

Aussi, ladite platine présente un trou oblong, tandis que lesdites joues sont reliées à ladite platine par un second élément vissable traversant au moins l'une desdites joues et ledit trou oblong. De la sorte, les joues sont non seulement rendues solidaires de la platine et par conséquent de l'embase, mais au surplus, grâce au trou oblong, les joues sont mobiles en translation entre une position rapprochée de l'embase et une position écartée de ladite embase.

Par ailleurs, ledit second élément vissable traverse avantageusement une seule desdites joues. Ainsi, ladite une seule desdites joues est reliée à ladite platine par le second élément vissable qui la traverse et qui traversent également ledit trou oblong. Bien évidemment, et ainsi qu'on l'expliquera ci-après, le second élément vissable permet de régler la position relative de l'une des joues par rapport à la platine et notamment d'entraîner à force ladite une des joues en appui contre la platine afin de bloquer la joue en translation par rapport à la platine. Par conséquent, grâce à la possibilité de bloquer une seule desdites deux jours par rapport à la platine, les deux joues étant reliés ensemble par le premier élément vissable, il est possible de régler indépendamment la prise en étau de la nervure pleine longitudinale et la position des joues par rapport à l'embase du bras support.

Au surplus, ledit bras support comporte avantageusement deux plaques de guidage opposées installées respectivement dans les deux extrémités opposées de ladite embase pour former un élément en I avec ladite platine, lesdites plaques de guidage opposées formant deux logements opposés par rapport à ladite platine pour recevoir lesdites joues. Ainsi, grâce aux plaques de guidage, lorsque les joues sont écartées de leur base, elles sont retenues non seulement par la platine par l'intermédiaire du second élément vissable, mais aussi grâce aux plaques de guidage contre lesquelles elles prennent appui. Par ailleurs, les plaques de guidage sont écartées l'une de l'autre d'une distance supérieure à la hauteur des joues. Cela autorise le pivotement sensible de ces joues dans un plan défini par la platine.

D'autres particularités et avantages de l'invention ressortiront à la lecture de la description faite ci-après d'un mode de réalisation particulier de l'invention, donné à titre indicatif mais non limitatif, en référence aux dessins annexés sur lesquels :
- la Figure 1 est une vue schématique de dessus d'un double ensemble de guidage conforme à l'invention installé dans une baie;
- la Figure 2 est une vue schématique en perspective éclatée d'un élément de détail de l'un des ensembles de guidages illustré sur la Figure 1 ;
- la Figure 3 est une vue schématique en perspective de l'élément de détail représenté sur la Figure 2 et d'un autre élément de détail représenté sur la Figure 1;
- la Figure 4 est une vue schématique partielle de détail de l'un des ensembles de guidage représentés sur la Figure 1 dans une première position;
- la Figure 5 est une vue schématique partielle de détail de l'ensemble de guidage représenté sur la Figure 4 dans une deuxième position;
- la Figure 6 est une vue schématique de détail de l'ensemble de guidage représenté sur la Figure 5 dans une troisième position ; et,
- les Figures 7A et 7B sont des vues schématiques de l'ensemble de guidage représenté sur la Figure 6 observé selon la flèche VII, et dans deux positions relatives différentes.

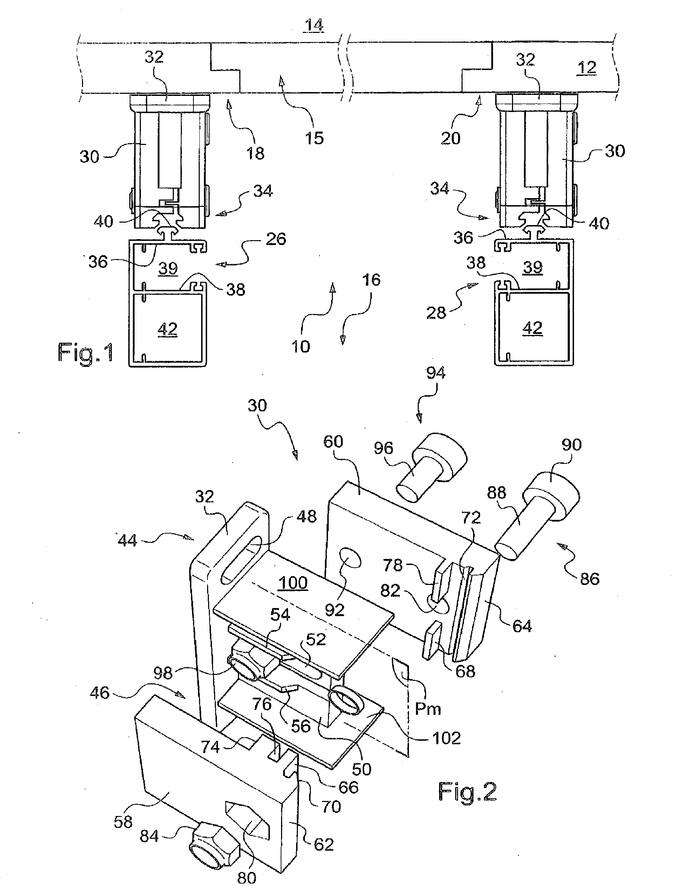

La Figure 1 illustre schématiquement et partiellement en vue de dessus une baie 10 pratiquée dans la paroi 12 d'un bâtiment. La baie 10 est refermée vers l'intérieur du bâtiment 14 par des vantaux 15. Elle est en outre adaptée à être obturée par un volet roulant ou un store vénitien par exemple, en avant des vantaux 15 vers l'extérieur du bâtiment 16.

La baie 10 présente deux bords latéraux faciaux 18, 20 sensiblement parallèles au plan moyen qu'elle définit.

Le volet roulant ou le store vénitien comprend un tablier apte à être entraîné en translation en regard des vantaux 15 selon un plan sensiblement perpendiculaire au plan de la Figure 1 et parallèle aux vantaux 15. Le guidage de ce tablier est réalisé par des profilés en U 26, 28 installés en regard le long des deux bords latéraux faciaux 18, 20, les bordures latérales du tablier étant respectivement montées à coulissement dans ces profilés en U 26, 28.

Ces profilés en U 26, 28 sont maintenus en position fixe par des bras support 30 montés respectivement sur les deux bords latéraux faciaux 18, 20 de la baie 10. Les bras support 30 sont identiques et ils seront décrits plus en détail ci-après. Ils présentent une embase 32 et à l'opposé, une extrémité de fixation 34. L'embase 32 est montée vissée contre les bords latéraux faciaux 18, 20, tandis que l'extrémité de fixation 34 s'étend à l'opposé.

Les profilés en U 26, 28 présentent deux ailes opposées 36, 38 définissant un logement longitudinal interne 39 et ils sont ouverts l'un en regard de l'autre. En outre, l'une des deux ailes opposées 36 présente, à l'extérieur du logement longitudinal interne 39, une nervure pleine longitudinale en T 40, tandis que l'autre aile opposée 38 forme, à l'extérieur, la paroi d'un profilé tubulaire 42, opposé à la nervure pleine longitudinale en T 40 et destiné à rigidifier les profilés en U, 26, 28.

La nervure pleine longitudinale en T 40, formant des éléments d'ancrage externe des profilés en U 26, 28, présente un bord libre renflé correspondant à la barre du T. Les profilés en U 26, 28 et la nervure pleine longitudinale en T qu'ils présentent, sont respectivement formés d'une seule pièce en aluminium, par exemple, à travers une filière. Un autre type de bord libre renflé pourrait également être envisagé.

Cette nervure pleine longitudinale en T 40 est destinée à venir en prise dans l'extrémité de fixation 34 du bras support 30. On décrira en détail ce bras support 30 en référence à la Figure 2.

Sur cette perspective éclatée du bras support 30, on retrouve l'embase 32. Elle est de forme méplate et elle s'étend longitudinalement entre deux extrémités opposées 44, 46. Ces dernières sont percées d'un orifice de fixation 48. Le bras support 30 comporte en outre une platine 50 montée perpendiculairement sur l'embase 32 en définissant un plan moyen Pm coupant les deux extrémités opposées 44, 46 de l'embase. La platine 50 est percée d'un trou oblong 52 qui s'étend selon une direction sensiblement perpendiculaire à l'embase 32. En outre, la platine 50 est munie sur l'une de ses faces apparaissant sur la Figure, de deux ailettes de guidage opposées 54, 56 qui s'étendent longitudinalement et respectivement le long des deux bords opposés du trou oblong 52. On expliquera ci-après le rôle de ces deux ailettes de guidage opposées 54, 56.

Au surplus, le bras support 30 comprend deux joues opposées 58, 60 destinées à venir en applique contre les deux faces opposées de la platine 50. Les deux joues opposées 58, 60 sont par exemple réalisées dans un matériau métallique d'une dureté supérieure à celle de la nervure pleine longitudinale en T 40. Elles présentent chacune un bord frontal 62, 64 et une bordure avant 66, 68 longeant le bord frontal. Les bordures avant présentent des retours 70, 72 formant dents pour constituer les mâchoires 70, 72. Les retours s'étendent respectivement en saillie des bordures avant 66, 68 le long de leur bord frontal 62, 64. Les joues opposées 58, 60 sont ajustées ensemble de façon que les bordures avant 66, 68 s'étendent en regard l'une de l'autre pour que les retours 70, 72 soient orientés l'une vers l'autre. Par ailleurs, la bordure avant 66 de l'une des joues opposées 58 présente une surépaisseur 74 dans laquelle est pratiquée une rainure 76 sensiblement parallèle au retour 70, tandis que la bordure avant 68 de l'autre joue 60 présente une languette 78 sensiblement parallèle au retour correspondant 72, laquelle languette 78 et destinée à venir en prise à l'intérieur de la rainure 76.

En outre, les joues 58, 60 présentent des premiers perçages transversaux 80, 82 pratiqués respectivement dans les bordures avant 66, 68 et en vis-à-vis. L'une des joues 58, présente autour du perçage transversal 80 et à l'opposé de la bordure avant 66 un logement de blocage d'un premier écrou 84. L'autre joue 60, est destinée à recevoir une première vis 86, dont la première tige 88 est apte à venir traverser les deux premiers perçages transversaux 80, 82 pour être engagée à travers le premier écrou 84, tandis que la première tête 90 de vis vient s'appliquer contre la joue 60 à l'opposé de la bordure avant 68. Un ressort de rappel élastique non représenté est engagé autour de la première tige 88 et entre la première tête 90 et ladite autre joue 60. Ce ressort de rappel élastique permet d'entraîner les joues 58, 60 l'une vers l'autre comme on l'expliquera plus en détail ci-après.

De plus, la seule autre joue 60 présente un second perçage transversal 92 situé à l'opposé du bord frontal 64 par rapport au premier perçage transversal 82 et est destiné à recevoir une seconde vis 94 dont la tige 96 est apte à être engagée à travers le trou oblong 52 de la platine 50 et à venir en prise dans un second écrou 98 monté entre les deux ailettes de guidage opposées 54, 56. On comprend alors que ces deux ailettes de guidage opposées 54, 56 sont également aptes à bloquer le second écrou 98 en rotation.

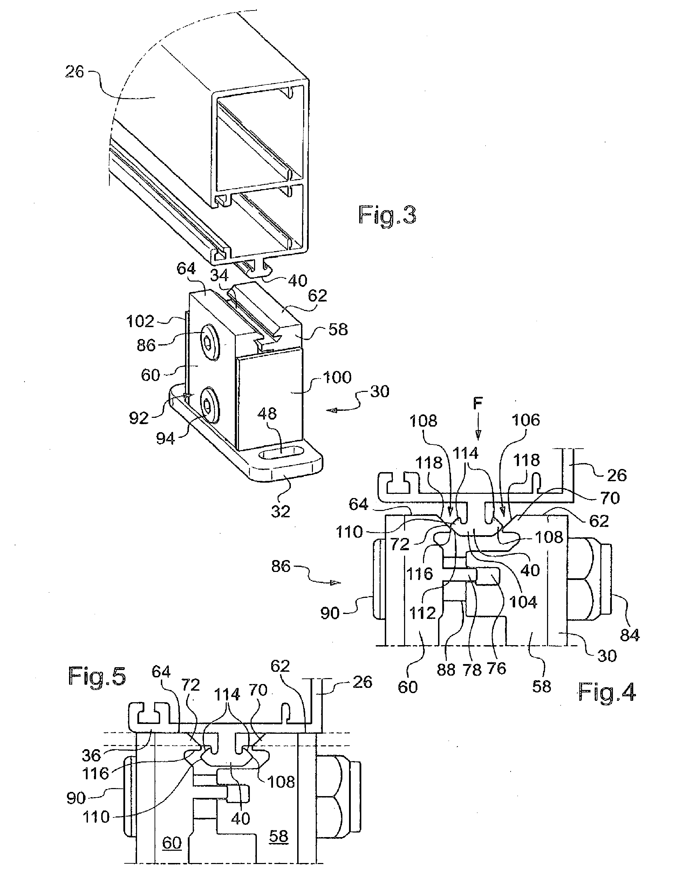

Au surplus, deux plaques de guidage opposées 100, 102 sont ajustées perpendiculairement sur l'embase 32 et contre la platine 50. Elles s'étendent sur la largeur de l'embase 32 et elles sont espacées l'une de l'autre d'une distance supérieure à la hauteur des joues. De la sorte elles permettent de guider en translation les joues 58, 60, mais aussi d'autoriser la rotation dans une certaine mesure, ainsi qu'on l'expliquera ci-après. On retrouve sur la Figure 3 le bras support 30 où les deux joues opposées sont appliquées sur les deux faces opposées de la platine 50 entièrement masquée, et logées entre les plaques de guidage opposées 100, 102, tandis que la languette 78 est engagée à l'intérieur de la rainure 76. En outre, la seconde vis 94 est engagée à travers le second perçage transversal 92 et le trou oblong 52, et vient en prise à travers le second écrou 98 qui est logé entre l'une des joues 58 et la platine 50 et qui est en prise entre les deux ailettes de guidage opposées 54, 56. Cette seconde vis 94 permet de relier l'embase 32 et les joues 58, 60. La première vis 86 traverse, elle, de part en part les joues 58, 60 au niveau des bordures avant ici masquées.

Le profilé en U 26 est alors destiné à être relié à l'extrémité de fixation 34 du bras support 30 par l'intermédiaire de la nervure pleine longitudinale en T 40.

On se reportera maintenant aux Figures 4 à 6 pour décrire en détail ce mode de liaison du profilé en U 26 avec le bras support 30. On retrouve sur la Figure 4 la nervure pleine longitudinale en T 40 et le bras support 30 présentant ses deux bords frontaux 62, 64. Tout d'abord, la partie formant barre 104 de la nervure pleine longitudinale en T 40, présente deux extrémités opposées 106, 108 terminées respectivement par des arêtes 108, 110. Ces arêtes 108, 110 sont respectivement définies par deux pans inclinés l'un par rapport à l'autre d'environ 90°, un pan externe 112 et un pan interne adjacent 114. En outre, les retours 70, 72 formant dents pour constituer les mâchoires, définissent respectivement des portées d'appui 114, 116, sensiblement parallèles aux bords frontaux correspondants 62, 64. Au surplus, les retours 70, 72 de chacune des joues présentent chacun un chanfrein 118 formant un angle aigu avec les portées d'appui correspondantes 114, 116.

Ainsi, lorsque le profilé en U 26 est entraîné selon la flèche F vers l'extrémité de fixation 34 du bras support 30 et que les pans externes 112 des deux extrémités opposées 106, 108 de la partie formant barre 104 viennent respectivement en appui à plat contre les chanfrein 118 des retours 70, 72, les joues 58, 60, au niveau des bordures avant 66, 68, sont écartées l'une de l'autre, tandis que les pans externes 112 forment rampes pour les chanfreins 118. Cet écartement se produit dans la mesure où la première vis 86 est desserrée. Alors, le ressort de rappel précité se contracte tandis que la languette 78 est guidée en translation vers l'extérieur de la rainure 76. Ce guidage permet de maintenir les deux joues 58, 60 sensiblement parallèles entre elles, et par conséquent de maintenir les retours 70, 72, en regard. Dès que les retours 70, 72 se situent en dessous des arêtes 108,110, les deux joues 58, 60 se rapprochent à nouveau sous l'effet du ressort de rappel, jusqu'à ce que les bords frontaux 62, 64 viennent en contact avec l'aile 36 du profilé en U 26, tandis que les retours 70, 72 viennent prendre appui contre les pans internes adjacents 114. Le rapprochement des deux joues 58, 60, est là encore guidé grâce à la languette 78 et à la rainure 76. La languette 78 est alors entraînée en translation vers le fond de la rainure 76. Ainsi, le profilé en U et le support 30 sont-ils pré-assemblés, avant l'assemblage définitif.

On observera que malgré le contact des bords frontaux 62, 64 avec l'aile 36, les retours 70, 72 demeurent en appui contre les pans internes adjacents 114. Car en effet, les portées d'appui 114, 116 sont respectivement espacées des bords frontaux 62, 64 d'une distance supérieure à la distance la plus courte qui sépare les pans internes adjacents 114 de l'aile 36.

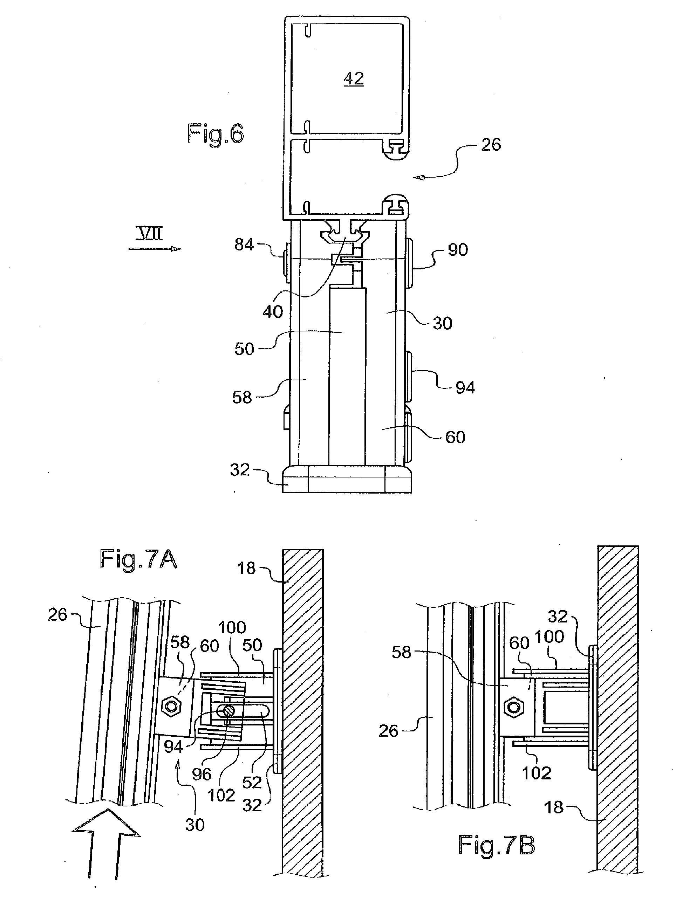

Grâce à cette caractéristique, lorsque la première tige de vis 88 est entraîné en rotation par l'intermédiaire de la première tête 90, le rapprochement des deux joues 58, 60 permet alors de coincer les retours 70, 72 respectivement entre les pan interne adjacents 114 et l'aile 36 et de venir appliquer à force les bords frontaux 62, 64 contre l'aile 36. De la sorte, comme illustré sur la Figure 6, le profilé 26 et le bras support 30 sont maintenus ensemble de manière rigide. Au surplus, grâce à la dureté des retours 70, 72 par rapport au profilé en U 26 et à la nervure pleine longitudinale en T 40, ces retours 70, 72 pénètrent localement dans la nervure pleine. Cela procède d'un meilleur mode de fixation. En outre, quelque soit le serrage des joues 58, 60 et des retours 70, 72 formant dents, qui prennent en étau la nervure pleine longitudinale en T 40, le profilé en U 26 demeure intacte et conserve sa géométrie.

Par ailleurs, et ainsi que l'illustre les Figures 7A et 7B, les joues 58, 60 sont susceptibles d'être reliées à la platine 50 de manière imperdable par l'intermédiaire de la seconde vis 94. Cependant, grâce au trou oblong 52, les joues 58, 60 sont mobiles en translation entre une position écartée de l'embase 32 et par conséquent du bord latéral facial 18, telle qu'illustrée sur la Figure 7A, et une position rapprochée de l'embase 32 telle qu'illustrée sur la Figure 7B. Partant, le profilé en U 26 est également mobile en translation, au niveau du bras support 30, entre une position écartée du bord latéral facial 18 et une position rapprochée du bord latéral facial 18. En outre, grâce à l'écartement relatif des plaques de guidage 100, 102, les joues 58, 60 sont aptes à pivoter sensiblement autour de la seconde vis 94 à mesure qu'elles sont écartées du bord latéral facial 18. Par ailleurs, les plaques de guidage 100,102, reprennent également les efforts de poids du profilé en U 26 par l'intermédiaire des joues 58, 60. Dans la position écartée, et sensiblement pivotée des joues 58, 60, dans le sens des aiguilles d'une montre, telle que représentée sur la Figure 7A, une extrémité du profilé en U 26 est libre et peut recevoir les bordures latérales du tablier. Dans la position rapprochée, où le tablier est apte à coulisser normalement entre les profilés en U 26, 28, le profilé en U 26 est ajusté parallèlement au bord latéral facial 18 et son extrémité est obturée par un rebord non représenté. Dans cette position alors, telle que représentée également sur la Figure 6, la seconde vis 94 est alors entraînée en rotation pour vissées s'attisent 96 dans le second écrou 98 et pour entraîner de la sorte à force la joue 60 contre la platine 50 et ainsi les désolidariser l'une à l'autre. En conséquence, les deux joues 58, 60, solidaires l'une de l'autre et enserrant la nervure pleine longitudinale en T 40, sont donc également solidaires de l'embase 32 et respectivement du profilé 26. On observera que le blocage de la paire de joues 58, 60 par rapport à la platine 50, peut se faire indépendamment de la solidarisation de la nervure pleine longitudinale 40 et de la paire de joues 58,60.

Bien évidemment, une pluralité de bras support 30 est ajustée verticalement de proche en proche sur les bords latéraux faciaux 18, 20 pour y maintenir respectivement en position fixe les profilés en U 26, 28.

On observera par ailleurs, que les première et seconde têtes de vis 90, 94 sont accessibles depuis l'intérieur de la baie et que leurs écrous correspondants 84, 98 sont maintenus bloqués en rotation. De la sorte le vissage est plus aisé.

## Revendications

1. Ensemble de guidage latéral de tablier coulissant pour l'obturation de baie (10), ledit ensemble comprenant un profilé en U (26, 28) et au moins un bras support (30) pour maintenir ledit profilé en U en position fixe le long d'un bord latéral (18, 20) d'une baie, ledit profilé en U (26, 28) présentant, d'une part un logement longitudinal interne (39) apte à recevoir la bordure latérale d'un tablier coulissant, et d'autre part des éléments d'ancrage externes (40) situés à l'extérieur dudit logement longitudinal interne (39), ledit au moins un bras support (30) présentant une embase (32) destinée à être montée sur ledit bord latéral (18, 20) de ladite baie, et une extrémité de fixation (34) située à l'opposé de ladite embase (32), lesdits éléments d'ancrage externes (40) dudit profilé en U étant aptes à venir en prise avec ladite extrémité de fixation (34) pour relier ensemble ledit profilé en U et ledit bras support,
**caractérisé en ce que** lesdits éléments d'ancrage externes (40) comportent une nervure pleine longitudinale ménagée longitudinalement sur ledit profilé en U (26, 28), tandis que ladite extrémité de fixation (34) comporte deux mâchoires (70, 72) en regard destinées à venir prendre en étau ladite nervure pleine longitudinale (40), pour relier ensemble ledit profilé en U (26, 28) et ledit bras support (30).

2. Ensemble de guidage latéral selon la revendication 1, **caractérisé en ce que** ladite nervure pleine longitudinale (40) présente un bord libre renflé (104).

3. Ensemble de guidage latéral selon la revendication 1 ou 2, **caractérisé en ce que** lesdites deux mâchoires (70, 72) en regard sont montées réglables en translation entre une position rapprochée de ladite embase (32) et une position écartée de ladite embase.

4. Ensemble de guidage latéral selon l'une quelconque des revendications 1 à 3, **caractérisé en ce que** lesdites mâchoires (70, 72) en regard sont montées réglables en translation entre une position rapprochée l'une de l'autre et une position écartée l'une de l'autre.

5. Ensemble de guidage latéral selon l'une quelconque des revendications 1 à 4, **caractérisé en ce que** ledit bras support (30) comprend une platine (50) montée en saillie de ladite embase (32), et deux joues (58, 60) présentant respectivement une bordure avant (66, 68), lesdites deux joues étant destinées à venir respectivement en applique contre les deux faces opposées de ladite platine (50),
et **en ce que** lesdites joues sont reliées ensemble par un premier élément vissable (86) traversant lesdites bordures (66, 68) de façon que lesdites bordures avant soient étendues en regard l'une de l'autre pour former lesdites mâchoires (70, 72).

6. Ensemble de guidage latéral selon la revendication 5, **caractérisé en ce que** lesdites joues (58, 60) présentent un retour (70, 72) en saillie desdites bordures (66, 68) pour former des dents, ledit retour présentant une portée d'appui (114, 116) opposée à un bord frontal (62, 64).

7. Ensemble de guidage latéral selon la revendication 5, **caractérisé en ce que** la bordure avant (66) de l'une desdites joues (58) présente une rainure (76) pratiquée en arrière du retour (70) de ladite une desdites joues (58) et sensiblement parallèlement audit retour (70), tandis que la bordure avant (68) de l'autre desdites joues (60) présente une languette (78) située en arrière du retour (72) de ladite autre desdites joues (60) et sensiblement parallèlement audit retour (72), et **en ce que** ladite languette (78) est apte à être engagée à l'intérieur de ladite rainure (76).

8. Ensemble de guidage latéral selon la revendication 6 ou 7, **caractérisé en ce que** les retours (70, 72) desdites joues (58, 60) présente un chanfrein (118) formant respectivement un angle aigu avec les portées d'appui (114, 116).

9. Ensemble de guidage latéral selon l'une quelconque des revendications 5 à 8, **caractérisé en ce que** lesdites joues (58, 60) sont reliées ensemble par des organes ressorts pour entraîner lesdites bordures l'une vers l'autre.

10. Ensemble de guidage latéral selon l'une quelconque des revendications 5 à 9, **caractérisé en ce que** ladite platine présente un trou oblong (52), tandis que lesdites joues (58, 60) sont reliées à ladite platine (50) par un second élément vissable (94) traversant au moins l'une desdites joues et ledit trou oblong (52).

11. Ensemble de guidage latéral selon la revendication 10, **caractérisé en ce que** ledit second élément vissable (94) traverse une seule desdites joues.

12. Ensemble de guidage latéral selon l'une quelconque des revendications 5 à 11, **caractérisé en ce que** ledit bras support (30) comporte deux plaques de guidage opposées (100, 102) installées respectivement dans les deux extrémités opposées (44, 46) de ladite embase (32) pour former un élément en I avec ladite platine (50), lesdites plaques de guidage opposées (100, 102) formant deux logements opposés par rapport à ladite platine pour recevoir lesdites joues (58, 60).

## Patentansprüche

1. Seitliche Führungsanordnung für einen Rollladen zum Verschließen einer Öffnung (10), wobei die genannte Anordnung ein U-Profil (26, 28) und wenigstens einen Tragarm (30) umfasst, um das U-Profil an einer festen Position entlang eines Seitenrands (18, 20) einer Öffnung zu halten, wobei das U-Profil (26, 28) einerseits einen Längsinnenaufnahmeraum (39), der fähig ist, einen Seitenrahmen eines Rollladens aufzunehmen, und andererseits äußere Verankerungselemente (40), die außerhalb des Längsinnenaufnahmeraums (39) gelegen sind, aufweist, wobei der wenigstens eine Tragarm (30) einen Sockel (32) aufweist, der dafür bestimmt ist, auf den Seitenrand (18, 20) der Öffnung montiert zu werden, und ein Befestigungsende (34), das gegenüber dem Sockel (32) gelegen ist, wobei die äußeren Verankerungselemente (40) des U-Profils fähig sind, in Eingriff mit dem Befestigungsende (34) zu kommen, um das U-Profil und den Tragarm miteinander zu verbinden,
**dadurch gekennzeichnet, dass** die äußeren Verankerungselemente (40) eine massive Längsrippe umfassen, die längs auf dem U-Profil (26, 28) vorgesehen ist, während das Befestigungsende (34) zwei gegenüber liegende Klauen (70, 72) umfasst, die dafür bestimmt sind, die massive Längsrippe (40) einzuspannen, um das U-Profil (26, 28) und den Tragarm (30) miteinander zu verbinden.

2. Seitliche Führungsanordnung nach Anspruch 1, **dadurch gekennzeichnet, dass** die massive Längsrippe (40) einen freien bauchigen Rand (104) aufweist.

3. Seitliche Führungsanordnung nach Anspruch 1 oder 2, **dadurch gekennzeichnet, dass** die zwei gegenüberliegenden Klauen (70, 72) durch Verschiebung zwischen einer an den Sockel (32) angenäherten Position und einer von dem Sockel entfernten Position verstellbar sind.

4. Seitliche Führungsanordnung nach einem der Ansprüche 1 bis 3, **dadurch gekennzeichnet, dass** die gegenüberliegenden Klauen (70, 72) durch Verschiebung zwischen einer aneinander angenäherten Position und einer voneinander entfernten Position verstellbar montiert sind.

5. Seitliche Führungsanordnung nach einem der Ansprüche 1 bis 4, **dadurch gekennzeichnet, dass** der Tragarm (30) eine von dem Sockel (32) überstehend montierte Platte (50) und zwei Wangen (58, 60), die jeweils einen Vorderrahmen (66, 68) aufweisen, umfasst, wobei die zwei Wangen dafür bestimmt sind, jeweils gegen die zwei entgegengesetzten Seiten der Platte (50) angelegt zu werden,
dass die Wangen durch ein erstes Schraubelement (86), das die Vorderrahmen (66, 68) derart durchdringt, dass die einander gegenüberliegenden Vorderrahmen erweitert sind, um die Klauen (70, 72) zu bilden, miteinander verbunden sind.

6. Seitliche Führungsanordnung nach Anspruch 5, **dadurch gekennzeichnet, dass** die Wangen (58, 60) ein von den Kanten (66, 68) vorstehende Rückführung (70, 72) aufweisen, um Zähne zu bilden, wobei die Rückführung eine Auflagefläche (114, 116) entgegengesetzt zu einem Vorderseitenrand (62, 64) aufweist.

7. Seitliche Führungsanordnung nach Anspruch 5, **dadurch gekennzeichnet, dass** der Vorderrahmen (66) einer der Wangen (58) eine Nut (76) aufweist, die hinter der Rückführung (70) einer der Wangen (58) und etwa parallel zu der Rückführung (70) angebracht ist, während der Vorderrahmen (68) der anderen der Wangen (60) eine Zunge (78) aufweist, die hinter der Rückführung (72) der anderen der Wangen (60) und etwa parallel zu der Rückführung (72) gelegen ist, und dass die Zunge (78) fähig ist, mit einem Inneren der Nut (76) in Eingriff gebracht zu werden.

8. Seitliche Führungsanordnung nach Anspruch 6 oder 7, **dadurch gekennzeichnet, dass** die Rückführungen (70, 72) der Wangen (58, 60) eine Abschrägung (118) aufweisen, die jeweils einen spitzen Winkel mit den Auflageflächen (114, 116) bildet.

9. Seitliche Führungsanordnung nach einem der Ansprüche 5 bis 8, **dadurch gekennzeichnet, dass** die Wangen (58, 60) durch Federelemente miteinander verbunden sind, um die Rahmen aufeinander zu zu ziehen.

10. Seitliche Führungsanordnung nach einem der Ansprüche 5 bis 9, **dadurch gekennzeichnet, dass** die Platte ein längliches Loch (52) aufweist, während die Wangen (58, 60) durch ein zweites Schraubelement (94), das wenigstens eine der Wangen und des länglichen Lochs (52) durchdringt, mit der Platte (50) verbunden sind.

11. Seitliche Führungsanordnung nach Anspruch 10, **dadurch gekennzeichnet, dass** das zweite Schraubelement (94) eine einzige der Wangen durchdringt.

12. Seitliche Führungsanordnung nach einem der Ansprüche 5 bis 11, **dadurch gekennzeichnet, dass** der Tragarm (30) zwei entgegengesetzte Führungsplatten (100, 102) umfasst, die jeweils in zwei entgegengesetzten Enden (44, 46) des Sockels (32) installiert sind, um mit der Platte (50) ein I-Element zu bilden, wobei die entgegengesetzten Führungsplatten (100, 102) zwei Aufnahmeräume bilden, die bezüglich der Platte entgegengesetzt sind, um die Wangen (58, 60) aufzunehmen.

## Claims

1. Lateral guiding unit for a sliding shutter intended to close a window (10), said unit comprising a U shaped profile (26, 28) and at least one support arm (30) intended to maintain said U shaped profile in a fixed position along a side edge (18, 20) of a window, said U shaped profile (26, 28) having, on the one hand, an inner longitudinal housing (39) intended to receive the lateral border of a sliding shutter and, on the other hand, external anchoring elements (40) located outside of said inner longitudinal housing (39), said at least one support arm (30) having a base plate (32) intended to be mounted on said side edge (18, 20) of said window, and a securing end (34) located at the opposite of said base plate (32), said external anchoring elements (40) of said U shaped profile being intended to engage said securing end (34) in order to connect together said U shaped profile and said support arm,
**characterized in that** said external anchoring elements (40) comprise a longitudinal solid ridge provided longitudinally on said U shaped profile (26, 28), while said securing end (34) comprises two facing jaws (70, 72) intended to clamp said longitudinal solid ridge (40), in order to connect together said U shaped profile (26, 28) and said support arm (30).

2. Lateral guiding unit according to claim 1, **characterized in that** said longitudinal solid ridge (40) has a bulging free edge (104).

3. Lateral guiding unit according to the claim 1 or 2, **characterized in that** said two facing jaws (70, 72) are adjustably mounted for translation between a position close to said base plate (32) and a position away from said base plate.

4. Lateral guiding unit according to any of claims 1 to 3, **characterized in that** said facing jaws (70, 72) are adjustably mounted for translation between a position with the one being close to the other and a position with the one being away from the other.

5. Lateral guiding unit according to any of claims 1 to 4, **characterized in that** said support arm (30) comprises a bracket (50) projecting from said base plate (32), and two cheeks (58, 60) respectively having a front border (66, 68), said two cheeks being intended to bear respectively against the two opposite faces of said bracket (50),
and **in that** said cheeks are connected together by a first screwable element (86) crossing said borders (66, 68) so that said front borders are extended the one facing to the other to form said jaws (70, 72).

6. Lateral guiding unit according to claim 5, **characterized in that** said cheeks (58, 60) have a rim (70, 72) projecting from said borders (66, 68) to form teeth, said rim having a bearing area (114, 116) facing to a front edge (62, 64).

7. Lateral guiding unit according to claim 5, **characterized in that** the front border (66) of one of said cheeks (58) has a groove (76) provided to the rear of the rim (70) of said one of said cheeks (58) and substantially parallel to said rim (70), while the front border (68) of the other of said cheeks (60) has a tongue (78) located to the rear of the rim (72) of said other of said cheeks (60) and substantially parallel to said rim (72), and **in that** said tongue (78) is intended to be engaged inside said groove (76).

8. Lateral guiding unit according to claim 6 or 7, **characterized in that** the rims (70, 72) of said cheeks (58, 60) are provided with a chamfer (118) respectively forming an acute angle with the bearing areas (114, 116).

9. Lateral guiding unit according to any of claims 5 to 8, **characterized in that** said cheeks (58, 60) are connected together by spring members to apply said edges one to each other.

10. Lateral guiding unit according to any of claims 5 to 9, **characterized in that** said bracket has an oblong hole (52), while said cheeks (58, 60) are connected to said bracket (50) by a second screwable element (94) crossing at least one of said cheeks and said oblong hole (52).

11. Lateral guiding unit according to claim 10, **characterized in that** said second screwable element (94) crosses only one of said cheeks.

12. Lateral guiding unit according to any of claims 5 to 11, **characterized in that** said support arm (30) comprises two opposite guiding plates (100, 102) fitted respectively in the two opposite ends (44, 46) of said base plate (32) to form an I shaped element with said bracket (50), said opposite guiding plates (100, 102) forming two opposed housings relative to said bracket in order to receive said cheeks (58, 60).
